Europäisches Patentamt

European Patent Office

Office européen des brevets

(19)

(11) Publication number: **0 000 818**

A1

(12)

# EUROPEAN PATENT APPLICATION

(21) Application number: **78300202.5**

(22) Date of filing: **26.07.78**

(51) Int. Cl.²: **B 60 C 23/04**
//G 01 L 9/14, G 08 B 23/00

(30) Priority: **04.08.77 AU 1103/77**

(43) Date of publication of application:
**21.02.79 Bulletin 79/4**

(84) Designated contracting states:
**BE CH DE FR GB LU NL SE**

(71) Applicant: **Gaertner, Oswald Peter**
**43 Cambridge Road Mooroolbark**
**Victoria 3138(AU)**

(72) Inventor: **Gaertner, Oswald Peter**
**43 Cambridge Road Mooroolbark**
**Victoria 3138(AU)**

(74) Representative: **Richards, David John et al,**
**Page, White & Farrer 27, Chancery Lane**
**London, WC2A 1NT(GB)**

(54) Tyre pressure monitoring system.

(57) The invention relates to a tyre pressure monitoring system for vehicles having pneumatic or hydraulic tyres. The system includes an enclosed magnet (18) pivotally mounted on the wheel of the vehicle and connected to the tyre so as to pivot, about an axis (19) located mid-way between the poles of the magnet, in response to changes in tyre pressure. A pick-up coil (21) is mounted on the vehicle body in a position wherein the magnet passes the coil during each rotation of the wheel so as to induce an electrical signal in the coil. The electrical signal varies according to the angular position of the magnet relative to the coil during each pass. An electronic circuit in the vehicle cabin is connected to the coil and analyses the signal to determine when the magnet is in a predetermined angular position indicating that the pressure, is above or below a predetermined limit. The electronic circuit initiates a visual and or audible alarm. A system using a micro-processor to provide a display of the actual tyre pressure is also mentioned.

FIG. 1.

-1-

## TYRE PRESSURE MONITORING SYSTEM

This invention relates to a tyre pressure monitoring device and more specifically to a tyre pressure monitoring device suitable for use on vehicles to provide an indication at a remote location on the vehicle when the tyre pressure is outside predetermined limits. The invention has particular utility in large motor transports where there are many wheels including dual wheel arrangements which make it very difficult to check for underinflated tyres, particularly by a visual inspection.

The main problem with such devices is the provision of some means for transmitting a measure of the tyre pressure from a rotating wheel to the vehicle body so that an indication of the pressure, or a significant rise or fall in pressure, may be evident to the driver of the vehicle. One way of transmitting the signal is by means of radio frequency (r.f.) transmitters located on the wheels and capable of transmitting signals to receivers in the vehicle cabin. The use of radio frequency transmitters is not desirable however as a number of problems arise. For example, it is necessary to provide a power supply on the wheels for the transmitters and as this would normally be provided by a battery there is the problem of replacing the batteries as well as protecting them against the obvious hazards of a wheel mounting. Furthermore an arrangement using r.f. transmission is susceptible to interference.

Thus it is the main object of the present invention to provide a tyre pressure monitoring device for vehicles to provide an indication to the driver at least when tyre pressure is below a determined minimum, which device does not suffer the problems of r.f. transmitters mentioned above.

Accordingly the invention provides a tyre pressure monitoring system for vehicles having pneumatic or hydraulic tyres comprising a transducer mounted on a wheel of said vehicle and adapted to respond to variations in pressure within a tyre mounted on said wheel, said transducer being adapted to provide signals to indicating means on the body of said vehicle so as to provide an indication at least when said tyre pressure is below a predetermined minimum, characterised in that, said transducer comprises a magnet movably mounted on said wheel and pneumatically or hydraulically connected to said tyre so as to assume different positions relative to a pick-up coil dependent upon said pressure, said pick-up coil being mounted on said body in a position such that said magnet passes said coil during each revolution of said wheel and induces different electrical signals in said coil dependent upon said position, said indicating means being adapted to receive said electrical signals from said pick-up coil and provide said indication.

In order that the invention may be more readily understood a particular embodiment will now be described with reference to the accompanying drawings wherein:

Figure 1 is a sectional view of a magnet and associated mounting block of a system according to the embodiment,

Figure 2 is a simplified circuit block diagram of a circuit for receiving and analysing the signal from a pick-up coil of the system and

Figure 3 is a series of graphs showing the electrical signal induced in the pick-up coil for various positions of the magnet and the corresponding signal at various points in the circuit of Fig. 2 labelled to correspond with the labelling of the various graphs.

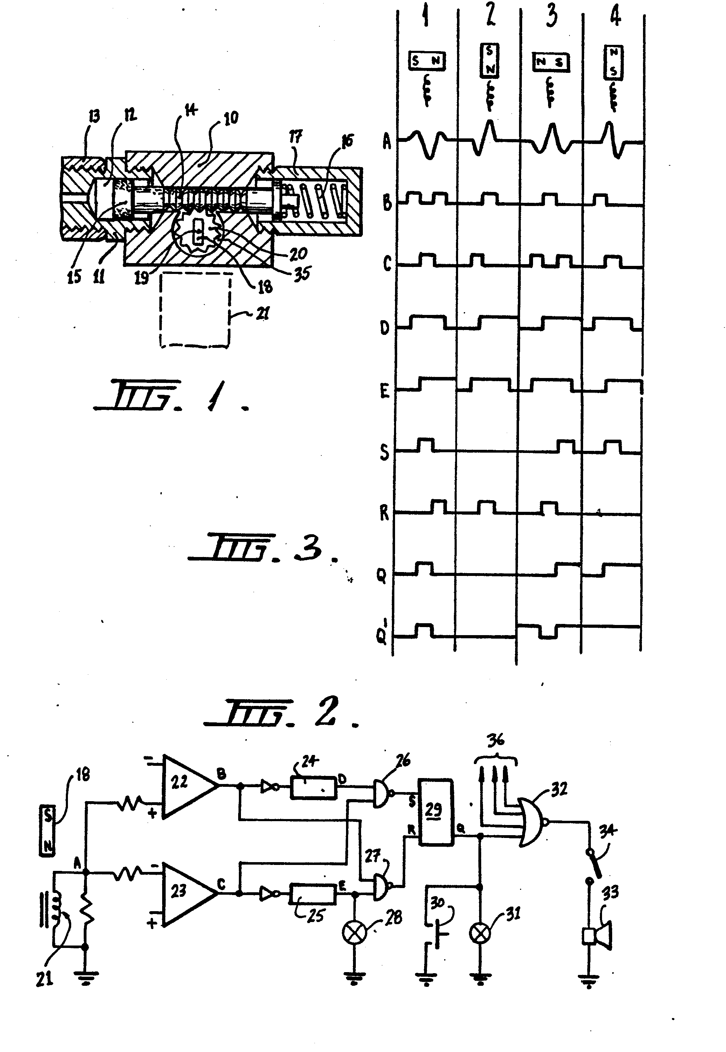

The system according to this embodiment comprises a T-piece (not shown) which is adapted to connect to a conventional tyre valve to provide a first connection for use in inflating or deflating the tyre using a conventional air pressure hose as well as second connection for a supply hose or pipe 13 to the magnet mounting block 10 shown in Fig. 1.

The magnet mounting block 10 is arranged on the inside of the vehicle wheel (not shown). The supply hose 13 is connected to an adaptor 11 and passes through the vehicle wheel to the T-piece previously described. The adaptor 11 threadably engages the block 10 and includes a bore 12 in communication with the inside of the hose 13. Thus the pressure in the bore 12 is equal to the tyre pressure. A toothrack 14 is slidably arranged in the block 10 and extends into the bore 12. The toothrack 14 has a piston or seal 15 at one end thereof which is located in the bore 12 of the adaptor 11 so as to form a seal preventing release

of pressure through to the other end of the toothrack. The other end of the toothrack is biased against a compression spring 16 and the tension of the spring is adjustable by means of an adjusting cap 17. A small bar magnet 18 is rotably mounted relative to the block in a cavity 35 formed in the block. The magnet is adapted to rotate about an axis 19 when the toothrack 14 moves longitudinally in the bore. The magnet 18 is mounted on a cock 20 which engages the toothrack 14 for this purpose.

The magnet mounting block 10 is affixed to a vehicle wheel by means not shown and is arranged in a position on the wheel convenient for mounting a pick-up coil represented by the dotted lines 21 adjacent the cavity 35 at one point during its rotation as shown in Fig. 1. The pick-up coil 21 is affixed to a part of the vehicle body or axle housing such that it is stationary with respect to the rotating block 10 and sufficiently close to the path of movement of said block 10 to cause an electrical signal to be induced in the coil as the magnet passes thereby.

It will be apparent that pressure in the bore 12 acting against piston 15 forces the toothrack 14 against the spring 16 to rotate the bar magnet 18 to a particular angular position peculiar to the pressure in the bore 12. Thus the angular position of the magnet 18 is a measure of the tyre pressure and each position of the magnet will cause a different electrical signal to be induced in the pick-up coil 21 as the magnet passes thereby during rotation of the wheel.

Reference should now be made to Fig. 2 which is a circuit block diagram of an electronic logic circuit connected to the pick-up coil 21 to interpret signals induced by the magnet 18. The circuit comprises two voltage comparators or operational amplifiers 22 and 23 respectively which are used at the input to the circuit. The comparator 22 works in a non-inverting condition and has an output B whilst the other comparator 23 works in an inverting condition with an output C. Information from each comparator is fed via a respective inverter to timers 24 and 25 respectively. The timers 24 and 25 store the information for a brief moment to allow AND gate 26 and AND gate 27 to compare the information with its counterpart. A green light 28 is connected to the output E of timer 25 and will flash each time the magnet 28 passes the pick-up coil 21 regardless of the position of the magnet and indicates that the system is in order. The output of gate 26 is connected to the set input of an RS flip-flop 29 and output of gate 27 is connected to the reset input of the same flip-flop.

A reset switch 30 is connected to the output Q of the flip-flop 29. The output Q of the RS flip-flop 29 is also used to control a red light 31 to provide a visual alarm when abnormal conditions exist and is also connected to an OR gate 32, the output of which is connected to an audible alarm 33 which may be switched off if so desired by means of switch 34. Other inlets 36 to OR gate 32 are from similar logic circuits related to other wheels of the vehicle.

Reference should now be made to Fig. 3 which shows a series of graphs labelled by capital letters indicating the digital signals occurring at correspondingly labelled points in the circuit of Fig. 2. At the top of Fig. 3 there is schematically represented four particular angular positions 1 to 4 of the magnet 18 and according to this particular embodiment these positions represent the critical pressures to be recognised by the circuit of Fig. 2. The four positions of the magnet 18 are as follows:

Position 1 - over pressure

Position 2 - normal pressure

Position 3 - low pressure.

Position 4 - complete loss of pressure.

As is apparent from the graphs of Fig. 3 the digital pulses at the flip-flop 29 for the above positions of magnet 18 are as follows:

Position 1 - the set pulse is followed by a reset pulse

Position 2 - no set pulse is present.

Position 3 - the reset pulse arrives at the flip-flop before the set pulse and consequently it will only reset for a brief moment at the next revolution of the wheel.

Position 4 - no reset pulse is present.

The two graphs Q and $Q^1$ for output of the flip-flop show the occurrence of the first and following pulses at output for the position of the magnet indicated.

It will be apparent from the above that under normal operating conditions the green light 28 flashes continually indicating that the unit is operating correctly. Should

the pressure in the tyre increase to an over-pressure condition such that the magnet 18 assumes position 1 the red light 31 will flash continually along with the green light 28 and the audible alarm will sound provided the switch 34 is in the closed condition. According to a modification the green light could be switched "off" except for test purposes. Should the vehicle come to a halt in the alarm state the reset button 30 is used to reset the circuit. Under normal conditions with the magnet in position 2 there is no set pulse present at S and therefore only the green light flashes continually indicating normal conditions. In position 3 the red light again flashes indicating an alarm condition and in position 4 there is no reset pulse present and thus the red light 31 remains on continuously. The driver is able to distinguish between positions 1 and 3, that is, over pressure and low pressure by the difference in "on" and "off" time of the flashing red light and audible alarm, as is apparent from the graphs of Fig. 3.

The system of this invention may vary considerably from the particular embodiment described above. For example, in simplified version, the system only detects pressure below a predetermined minimum and thus the magnet 18 need only move between two positions, say positions 2 and 3 in Fig. 3. In other words the magnet 18 is only required to move through ¼ turn and thus the arrangement for rotating or pivoting the magnet may be simplified to a mechanical lever rather than the toothrack. The detecting circuitry would also become relatively more simple.

In a more complex version the analogue signals developed in the pick-up coil of the particular embodiment described could be fed to a micro-processor which, in turn, could be adapted to provide a visual display indicative of the actual tyre pressure. It is also conceivable that the outputs from a number of pick-up coils located adjacent respective magnets of the various wheels of a vehicle could be time multiplexed to a single logic circuit thus avoiding the need for a separate logic circuit for each pick-up coil. However, since the logic circuit could be manufactured as a single integrated circuit the cost thereof related to the overall cost of the system may be of little consequence and the need to time multiplex may disappear.

It should be apparent that the system of this invention provides, inter alia, a most convenient means for transferring a signal from a rotating wheel to the stationary vehicle body. Of course, the cavity 20 is sealed by a perspex or the like cover and thus the magnet and associated mechanics for causing pivotal or rotational movement thereof is in a sealed environment free from dirt and other hazards of a wheel mounting. A suitable clip or bracket (not shown) may be welded or otherwise attached to the wheel to detachably retain the magnet mounting block in place. This detachable arrangement is desirable particularly with dual wheel arrangements as are found on most large motor transports. In this situation both magnets are mounted on the inside of the innermost wheel so as to enable the associated pick-up coil to be mounted closely thereby. In many cases it is necessary to transpose the wheels of a dual wheel arrangement in which case the magnet mounting blocks must be readily detachable so as to enable relocation on the other wheel. In a dual wheel arrangement it is considered sufficient to have only one pick-up coil for the two or more magnets, in which case an alarm condition does not specify the exact wheel which is outside the limits but only the particular set of wheels. In the case of a single wheel of course there is a separate channel and thus alarm light, for each wheel and thus the faulty wheel can be immediately isolated.

It is further envisaged that the perspex cover over the magnet could if desired, be calibrated in association with the position of the magnet to indicate tyre pressure in which case a tyre pressure gauge would be available at each wheel provided the magnet mounting block could be position to facilitate viewing of the cover without too much difficulty.

Claims:

1. A tyre pressure monitoring system for vehicles having pneumatic or hydraulic tyres comprising a transducer mounted on a wheel of said vehicle and adapted to respond to variations in pressure within a tyre mounted on said wheel, said transducer being adapted to provide signals to indicating means on the body of said vehicle so as to provide an indication at least when said tyre pressure is below a predetermined minimum, characterised in that, said transducer comprises a magnet movably mounted on said wheel and pneumatically or hydraulically connected to said tyre so as to assume different positions relative to a pick-up coil dependent upon said pressure, said pick-up coil being mounted on said body in a position such that said magnet passes said coil during each revolution of said wheel and induces different electrical signals in said coil dependent upon said position, said indicating means being adapted to receive said electrical signals from said pick-up coil and provide said indication.

2. A tyre pressure monitoring system as defined in Claim 1, characterised in that, said magnet is pivotally mounted on said wheel about an axis between the poles of said magnet such that pivotal movement causes said different positions which move one pole away from said pick-up coil and the other pole closer to said pick-up coil so as to alter the electrical signal induced in said coil.

3.     A tyre pressure monitoring system as defined in
Claim 2, characterised in that, a piston arrangement is
accommodated in a pneumatic or hydraulic circuit to said
tyre so as to move longitudinally in a bore according to
variations in said pressure, said piston being spring
biased against said pressure and mechanically connected to
said magnet so as to cause said pivotal movement.

4.     A tyre pressure monitoring system as defined in
Claim 3, characterised in that, said mechanical connection
comprises a toothrack adapted to move with said piston
and being in engagement with a cock affixed to said magnet.

5.     A tyre pressure monitoring system as defined in
Claim 3, characterised in that said mechanical connection
comprises a lever arrangement between said piston and said
magnet.

6.     A tyre pressure monitoring system as defined in any
one of the preceding claims, characterised in that said
pressure is pneumatic pressure and said indicating means
includes an electronic circuit adapted to analyse said
electrical signals and provide a signal to said indicating
means when said pressure is below said predetermined
minimum or above a predetermined maximum.

7.     A tyre pressure monitoring system as defined in
Claim 6, characterised in that said indication comprises
an audible and visual alarm.

8.    A tyre pressure monitoring system as defined in any one of the preceding claims, characterised in that, said magnet is mounted within a mounting block removably attached to said wheel so as to enable ready detachment of said mounting block.

FIG. 1.

FIG. 3.

FIG. 2.

1/1

# European Patent Office

## EUROPEAN SEARCH REPORT

Application number

EP 78 30 0202

## DOCUMENTS CONSIDERED TO BE RELEVANT

| Category | Citation of document with indication, where appropriate, of relevant passages | Relevant to claim |
|---|---|---|
| X | <u>AU - B - 486 277</u> (SEIKI CO.)<br><br> * Page 3, lines 1-27; page 5, lines 2-4; page 6, lines 16-17; page 7, lines 14-17; page 9, lines 8-11; page 11, line 11 - page 12, line 7; page 13, line 1 - page 14, line 15; page 17, line 14 - page 18, line 4; figures 1-6 * | 1-3,6-8 |
| X | <u>CH - A - 456 370</u> (ETTER)<br><br> * Column 1, line 26 - column 2, line 4, column 3, lines 17-50; figures 1 and 2 * | 1,3,6,7 |
| X | <u>FR - A - 2 142 001</u> (SUGIYAMA)<br><br> * Page 1, lines 1-5; page 2, lines 1-23, line 32 - page 3, line 8, line 38 - page 4, line 11, figures 1-5a * | 1,2,6,7 |
| X | <u>GB - A - 1 224 463</u> (THOMPSON)<br><br> * Page 2, lines 9-44, line 106 - page 3, line 50, lines 82-87; figures 1-3,4,7 * | 1,3,5-7 |
| A | <u>US - A - 3 810 090</u> (DAVIS et al.)<br><br> * Abstract * | 1 |

---

### CLASSIFICATION OF THE APPLICATION (Int. Cl.²)

B 60 C 23/04//
G 01 L 9/14
G 08 B 23/00

### TECHNICAL FIELDS SEARCHED (Int.Cl.²)

B 60 C 23/04

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-11-1978 | VERLEYE |

EPO Form 1503.1 06.78